# FASCICULE DE BREVET EUROPEEN

(11) **EP 1 178 720 B1**
(45) Date de publication et mention de la délivrance du brevet: **26.11.2003**
(21) Numéro de dépôt: 00929614.6
(22) Date de dépôt: 12.05.2000
(51) Int. Cl.: A01G 1/00

(54) **MODULE POUR LA REALISATION D'UNE VEGETATION EXTENSIVE SUR TOITURES OU TERRASSES ET ARRANGEMENT ET PROCEDE METTANT EN OEUVRE DE TELS MODULES**
MODULE ZUM REALISIEREN EINER EXTENSIVEN VEGETATION AUF DÄCHERN UND TERRASSEN SOWIE ANORDNUNG UND VERFAHREN MIT VERWENDUNG DERARTIGER MODULE
MODULE FOR PRODUCING EXTENSIVE VEGETATION ON ROOFS OR TERRACES AND ARRANGEMENT AND METHOD FOR SETTING UP MODULES OF THIS TYPE

(30) Priorité: 12.05.1999 FR 9906185
(43) Date de publication de la demande: 13.02.2002
(73) Titulaire: SOPREMA S.A., 67100 Strasbourg (FR)
(72) Inventeur: BINDSCHEDLER, Pierre, Etienne, F-67210 Obernai (FR); LASSALLE, François, F-67150 Erstein (FR)
(74) Mandataire: Nuss, Pierre
(86) Numéro de dépôt international: FR0001295
(87) Numéro de publication internationale: WO00069248

(56) Documents cités:
- DE-U- 29 721 620
- DE-U- 29 809 556
- FR-A- 2 740 151
- FR-A- 2 761 856
- US-A- 3 923 729
- US-A- 4 058 930

## Description

La présente invention concerne le domaine du bâtiment et des travaux publics, en particulier les toits, toitures et terrasses, et a pour objet un module pour la réalisation d'une végétation extensive sur des toitures ou des terrasses, ainsi qu'un arrangement et un procédé pour l'installation d'une telle végétation extensive.

Il existe depuis plusieurs décennies une demande en matière d'aménagement des toits, notamment horizontaux mais également inclinés, et des terrasses, concernant la mise en place d'une végétation sur ces supports.

Ces réalisations du type "jardin sur toit", notamment connues sous les désignations "terrasses-jardins" ou végétalisation intensive, sont généralement effectuées par l'entrepreneur de jardins qui dispose une couche de drainage sur le support, la recouvre de terre végétale et y cultive des végétaux ornementaux de même type que dans les jardins au sol.

Pour s'affranchir de la surcharge pondérale et des contraintes d'entretien résultant de cette technique traditionnelle, il a été proposé des techniques alternatives ne nécessitant pas d'arrosage et mettant en oeuvre des composants choisis (substrats, couche filtrante et couche de drainage) sur une faible épaisseur et une gamme végétale spécifique, éventuellement, au moins partiellement, conditionnés sous forme de rouleaux à dérouler sur site.

Néanmoins, ces techniques alternatives sont déclinées uniquement sous forme de systèmes standards adaptés aux grandes surfaces, sont destinées à être mises en oeuvre par des personnels spécialisés, ne sont pas accessibles à l'utilisateur bricoleur occasionnel, ne conviennent pas aux petites surfaces et ne sont que difficilement adaptables aux contraintes particulières telles que des contraintes climatiques locales, des contraintes esthétiques spécifiques ou autres.

En outre, ces techniques alternatives nécessitent la mise en place systématique d'une couche filtrante entre le substrat de culture et la couche de drainage ainsi que l'installation d'éléments d'arrêt sur les supports en pente pour la rétention des différentes couches.

La présente invention a notamment pour but général de pallier au moins certains des inconvénients précités et de fournir une solution pour une végétalisation extensive de toitures et de terrasses, également en pente, pouvant être mise en oeuvre aisément par des néophytes, tout en pouvant être préparée et proposée prête à la pose par des professionnels, adaptable à des surfaces de dimensions variables, s'adaptant durablement au climat et à la station écologique, sans arrosage et avec une surcharge limitée et/ou autorisant des mélanges variétaux sur une même surface, tout en résultant d'une production standardisée.

Par le document FR-A-2 761 856, on connaît déjà des plaques destinées à former un tapis végétalisé.

Ces plaques sont obtenues par découpage dans un tapis végétal préformé et sont constituées par une portion de nappe de maintien supportant une couche de base qui elle-même porte des plantes.

Toutefois, l'obtention de ces plaques est fastidieuse puisqu'elle nécessite le découpage de la nappe support sous-jacente.

En outre, cette nappe support est flexible, ce qui rend difficile sa manipulation, et présente une structure plane, sans rebord, ne permettant pas de conserver l'intégrité des plaques résultantes, ni d'éviter l'effritement du bord de la couche de base et sa désintégration au cours des opérations de manipulation et de transport.

Par ailleurs, le document FR-A-2 740 151 concerne un module de gazon comprenant un plateau perforé métallique avec un rebord, formant support sous-jacent, destiné à rester en place après installation du module dans la pelouse à former et autorisant une rétraction ultérieure dudit module de ladite pelouse.

De plus, une ceinture amovible supplémentaire doit être montée en périphérie supérieure du plateau pour annuler le maintien de la couche de substrat pendant son transport.

La présente invention a pour but particulier de surmonter les limitations précitées et de fournir un module pour la réalisation d'une végétation sur des toitures ou des terrasses qui soit aisé à fabriquer et à manipuler avec une structure rigide et des parois latérales, et qui présente des propriétés de biodégradabilité et d'hydrorétention.

A cet effet, l'invention concerne un module du type correspondant au préambule de la revendication 1 et faisant état des caractéristiques mentionnées dans la partie caractérisante de cette revendication.

L'invention a également pour objet un arrangement de végétalisation extensive pour toits ou terrasses, principalement constitué, d'une part, par un complexe isolant et étanchéifiant, résistant à la pénétration racinaire et recouvrant la surface du toit ou de la terrasse considéré(e), d'autre part, par une couche drainante à forte capacité hydrorétentrice recouvrant ledit complexe et, enfin, par des modules du type précité disposés de manière adjacente les uns à côté des autres sur la couche drainante et en nombre suffisant pour couvrir sensiblement la surface de toit ou de terrasse précitée.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'une première variante de réalisation d'un contenant faisant partie d'un module selon l'invention ;
la figure 2 est une vue en perspective et en coupe d'un arrangement de végétation extensive pour toits ou terrasses selon une première variante de réalisation de l'invention ;
la figure 3 est une vue en perspective et en coupe d'un arrangement de végétation extensive pour toits ou terrasses selon une seconde variante de réalisation de l'invention, et,
la figure 4 est une vue en perspective d'une seconde variante de réalisation d'un contenant pouvant faire partie d'un module selon l'invention.

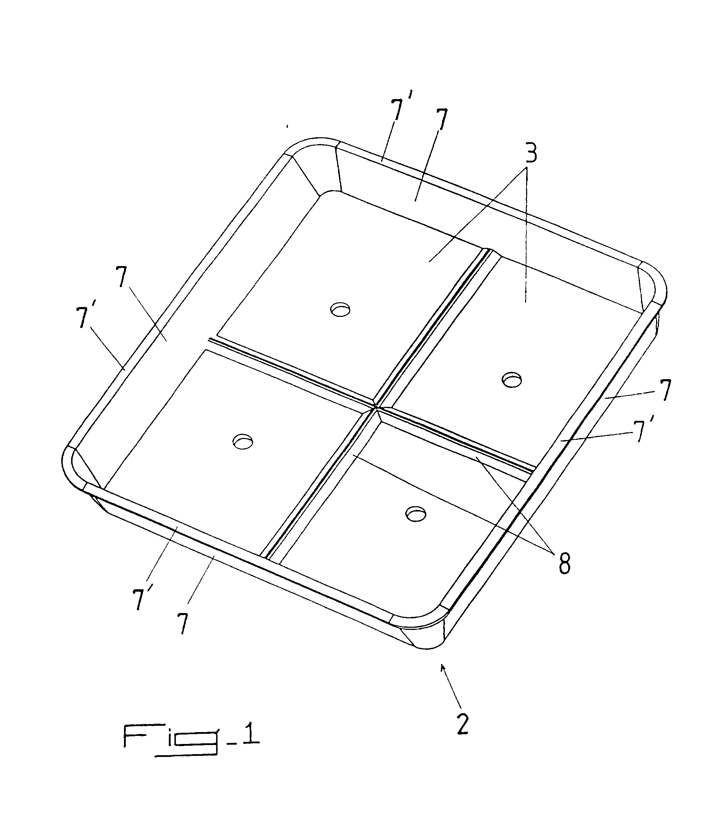

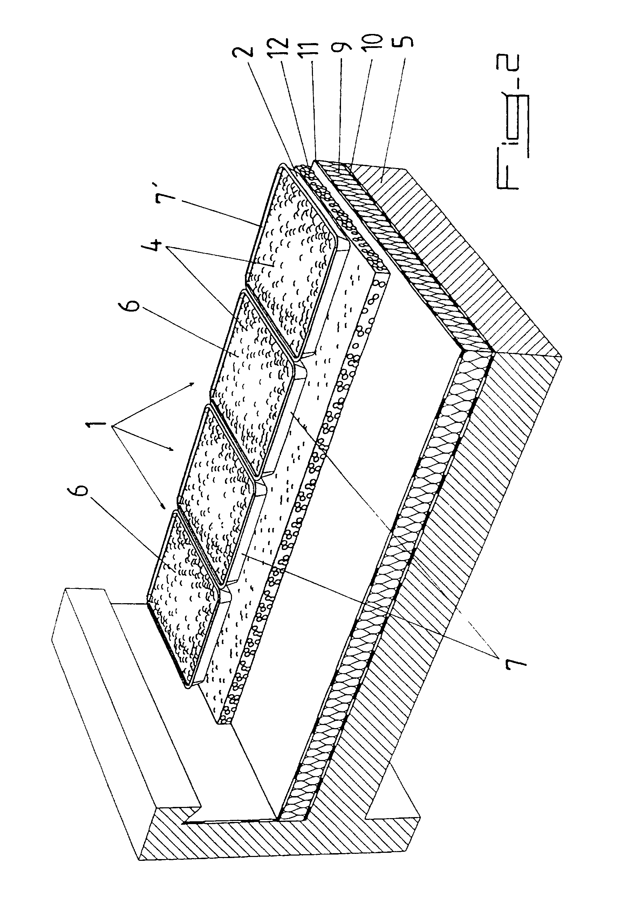

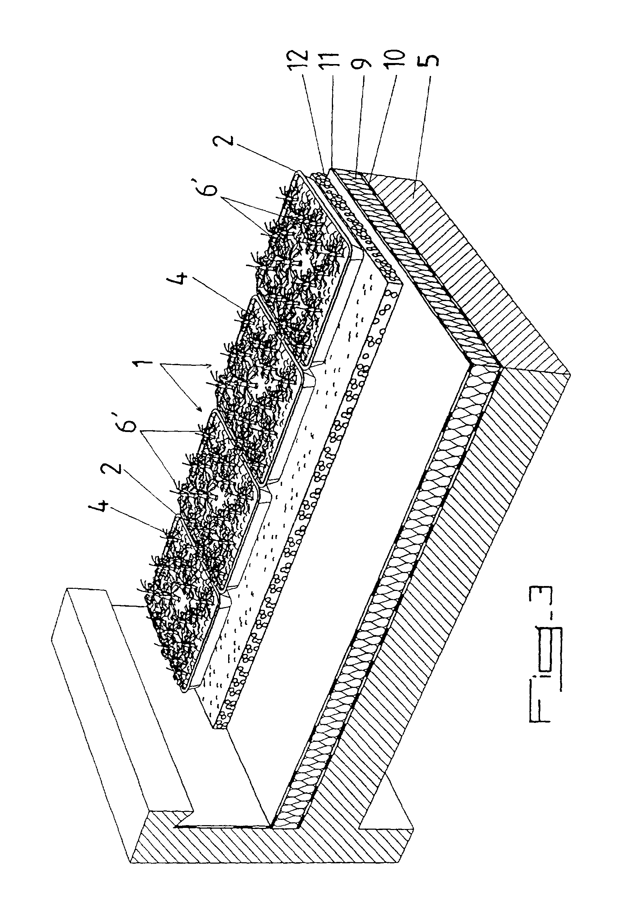

Conformément à l'invention et comme le montrent les figures 1 à 3 des dessins annexés, le module 1 pour la réalisation d'une végétation extensive sur des toitures ou des terrasses est principalement constitué par un contenant 2 à pourtour polygonal, en forme de barquette ou de caissette de faible profondeur, présentant un fond 3 perforé et réalisé en un matériau biodégradable et par un substrat de culture 4 recouvrant avec une épaisseur prédéterminée le fond 3 du contenant 2 et ensemencé de semis 6 ou portant des plants 6' précultivés choisis dans une gamme variétale susceptible de croître et de perdurer sur un substrat de culture 4 d'épaisseur limitée.

Les modules 1 présenteront des dimensions standardisées, optimisant l'espace utilisé sur des palettes standards et autorisant une manipulation aisée par l'utilisateur.

De plus, ils pourront être proposés à la clientèle en deux degrés de "finition" distincts, à savoir, avec un substrat 4 ensemencé ou avec un substrat 4 portant des plants 6' déjà précultivés par le fabricant ou l'horticulteur.

De manière avantageuse, le matériau constituant le contenant 2 est hydrorétenteur et contient ou est formé de substances fertilisantes (éventuellement après dégradation) pour les plantes présentes dans le module 1, ledit contenant 2 étant conformé par pressage.

La structure des contenants 2 est définie de telle manière qu'ils soient résistants mécaniquement aux intempéries pendant la phase de préculture et au cours de leur manipulation lors des phases de transport et d'installation, tout en étant biodégradables à court ou à moyen terme sur site ultime.

Les caractéristiques mécaniques pourront être ajustées par la valeur de la pression employée, les additifs intégrés et les matériaux ajoutés à la composition de base de la matière constituant les contenants 2.

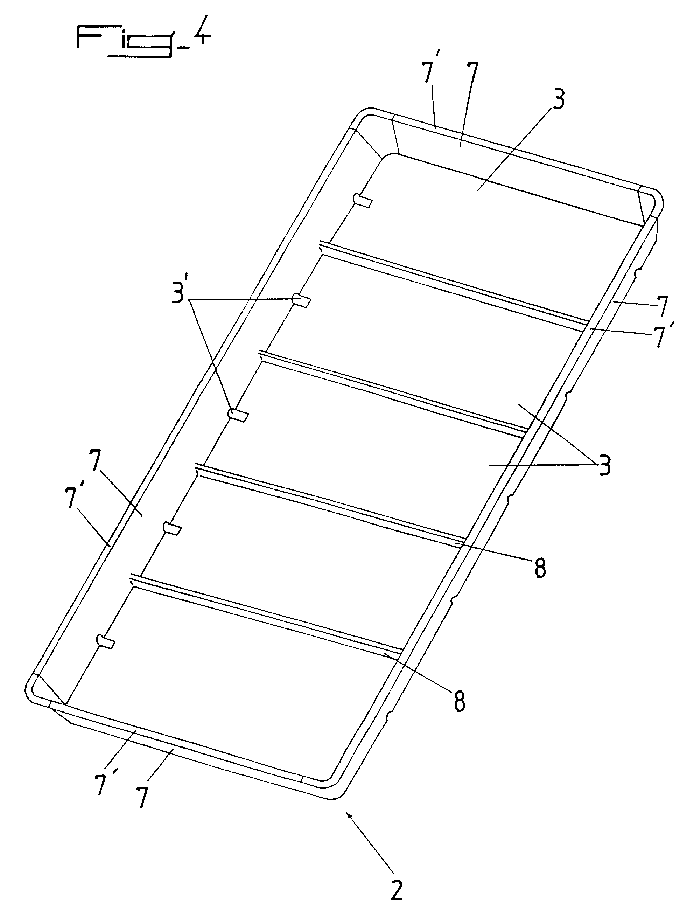

Selon l'invention, le contenant 2 est réalisé à base de pâte de carton recyclé, est conformé par pressage ou matriçage à haute pression, présente une forme extérieure sensiblement quadrilatérale et comporte, d'une part, des parois latérales 7 verticales ou légèrement inclinées vers l'extérieur et se terminant ou non par des rebords 7' et, d'autre part, un fond plat 3 pourvu de nervures de renforcement et de rigidification 8, formées par déformation dudit fond 3 (Figures 1 et 4).

Selon une première variante de réalisation, le contenant 2 peut présenter une forme extérieure carrée et comporter des nervures 8 disposées en croisillon ou en grille, chaque portion de fond 3 délimitée par des segments de nervures 8 et/ou des parties de parois latérales 7 comportant au moins une ouverture ou un perçage traversant 3' (voir figure 1).

Conformément à une seconde variante de réalisation, le contenant 2 peut présenter une forme extérieure rectangulaire et comporter des nervures 8 espacées et s'étendant transversalement par rapport à la direction longitudinale dudit contenant 2, chaque portion de fond 3 délimitée par des segments de nervures 8 et/ou des parties de parois latérales 7 comportant au moins une ouverture ou un perçage traversant 3', par exemple à cheval sur le fond 3 et les parois latérales 7 (voir figure 4).

Les nervures 8 formant rainures en sous-face du fond 3 pourront servir de voies d'évacuation de l'eau en préculture et, le cas échéant, de crans d'accrochage sur d'éventuelles protubérances formées sur la surface support recevant les modules 1.

En outre, lesdits contenants 2 pourront éventuellement présenter des amorces de rupture ou des lignes de fragilisation au niveau des arêtes de jonction du fond 3 avec les parois latérales 7, pour rendre plus aisé l'enlèvement de ces dernières par cassure.

Le substrat de culture 4 présente des propriétés drainante et hydrorétentrice et une faible densité, est majoritairement de nature minérale et est soumis à une opération de tassement avant ensemencement ou, le cas échéant, préculture.

Cette dernière disposition permet, en relation avec la présence d'un fond 3 sensiblement plein, relativement épais (2 à 5 cm) et continu, d'obtenir une stabilité structurale et un maintien en position des modules sur une surface en pente par simple contact mutuel et d'éviter ainsi l'installation de dispositifs de retenue intermédiaires, notamment avant enracinement des plantes dans les couches sous-jacentes, l'effort de poussée ne devant être repris qu'en bas de pente.

Le substrat de culture essentiellement de nature minérale assurera un maintien dans le temps de son épaisseur et pourra, par exemple, comprendre de la roche volcanique, de la matière minérale expansée (schiste, argile ou verre expansé), des matériaux de recyclage tels que de la mâchefer ou des déchets ou rebuts en terre cuite.

Le substrat de culture 4 pourra, par exemple, consister en un substrat du type connu sous la désignation SOPRAFLOR X et commercialisé par la demanderesse.

Conformément à une caractéristique de l'invention, la gamme variétale des plantes présentes dans les modules 1 comprend notamment les plantes tapissantes résistant à la sécheresse.

Cette gamme variétale comprendra, en outre, préférentiellement des espèces choisies dans le groupe formé par les plantes succulentes, les graminées et les plantes vivaces xérophiles.

Ainsi, les espèces végétales utilisées sont avantageusement sélectionnées pour leur parfaite adaptation aux conditions extrêmes dans leur situation définitive (sans arrosage et avec un entretien minimal) et leur faculté de préculture dans des contenants 2 (notamment exclusion des plantes à système racinaire pivotant et de celles présentant un développement insuffisant dans ce mode de culture).

La présente invention a également pour objet un arrangement de végétation extensive pour toits ou terrasses, principalement constitué, d'une part, par un complexe 9, 10, 11 isolant et étanchéifiant recouvrant la surface du toit ou de la terrasse 5 considéré(e), d'autre part, par une couche drainante 12 à forte capacité hydrorétentrice recouvrant ledit complexe 9, 10, 11 et, enfin, par des modules 1 du type précité, disposés de manière adjacente les uns à côté des autres et en nombre suffisant pour couvrir sensiblement la surface de toit ou de terrasse (5) précitée.

Selon une caractéristique de l'invention, le complexe 9, 10, 11 est essentiellement composé d'un revêtement d'étanchéité 11, par exemple de type bitumineux, éventuellement posé sur une membrane pare-vapeur 10 et un isolant thermique 9, l'ensemble étant posé sur la surface du toit ou de la terrasse 5 à couvrir de végétation.

Ledit complexe pourra également comprendre un écran anti-racines, destiné à protéger le revêtement d'étanchéité en créant un barrage contre la progression des racines des plantes adventices.

Cet écran pourra, par exemple, consister en un film en polyéthylène de couleur noire, par exemple du type de celui connu sous la désignation écran V.A.R. par la déposante (épaisseur : environ 100 µm ; poids surfacique : environ 85 g/m²).

Les fonds 3 des contenants 2 adjacents constitueront une couche filtrante capable de retenir les substances fertilisantes et éviteront la migration des constituants du substrat 4 dans la couche de drainage 12.

Au bout d'un moment, les racines des plantes traversent les fonds 3, tout d'abord au niveau de leurs orifices puis à travers leur matière même, pour aller s'approvisionner en eau dans la couche drainante 12 tout en puisant leurs éléments nutritifs dans la couche de substrat 4.

L'enlèvement des parois latérales 7, aisément réalisable du fait du ramollissement du matériau constitutif du contenant 2 au niveau de l'arête entre le fond 3 et lesdites parois 7 affaiblie par une rainure formant ligne de cassure préférentielle, permet de juxtaposer les modules 1 adjacents sans laisser persister de bandes dépourvues de végétation et de réaliser une végétation d'aspect continu.

La couche drainante 12 est déterminée en nature, qualité et épaisseur en fonction des contraintes climatiques, de la surcharge admissible et de la pente.

Elle est essentiellement constituée d'agrégats minéraux poreux à forte capacité hydrorétentrice (15 à 35 % en volume de capacité de rétention en eau), utilisés en épaisseur comprise entre 5 et 10 cm. L'adaptation de l'arrangement est ainsi possible sous des climats présentant un risque de sécheresse d'une à douze semaines consécutives.

De manière avantageuse, la couche drainante 12 est formée d'un produit choisi dans le groupe formé par les grains d'argile expansée concassés et calibrés, les grains de pouzzolane calibrés, les grains de pierre ponce calibrés, les granulats à pouvoir hydrorétenteur similaires ou encore les plaques de polystyrène expansé.

La couche drainante 12 pourra, par exemple, être constituée par un produit du type connu sous la désignation SOPRALITHE ou SOPRADRAIN (noms déposés de la demanderesse).

La présente invention a, par ailleurs, également pour objet un procédé d'installation d'une végétation extensive sur des toits ou des terrasses, consistant à mettre en place un complexe isolant et étanchéifiant 9, 10, 11 sur la surface de toit ou de terrasse 5 à recouvrir, puis à disposer une couche drainante 12 sur ledit complexe 9, 10, 11 et, enfin, à déposer côte à côte des modules 1 du type précité sur ladite couche drainante 12, après enlèvement de leurs parois latérales 7 et de manière à mettre en contact les fonds 3 de modules 1 adjacents et à recouvrir sensiblement la totalité de ladite surface.

## Revendications

1. Module pour la réalisation d'une végétation extensive sur des toitures ou des terrasses, principalement constitué par un contenant (2) à pourtour polygonal, présentant un fond (3) perforé et réalisé en un matériau biodégradable et par un substrat de culture (4) recouvrant avec une épaisseur prédéterminée le fond (3) du contenant (2) et ensemencé de semis (6) ou portant des plants (6') précultivés, **caractérisé en ce que** le contenant (2) est en forme de barquette ou de caissette de faible profondeur, est réalisé à base de pâte de carton recyclé par pressage ou matriçage à haute pression, présente une forme extérieure sensiblement quadrilatérale et comporte, d'une part, des parois latérales (7) verticales ou légèrement inclinées vers l'extérieur et se terminant ou non par des rebords (7') et, d'autre part, un fond plat (3) pourvu de nervures de renforcement et de rigidification (8), formées par déformation dudit fond (3), les semis (6) et les plants (6') étant choisis dans une gamme variétale susceptible de croître et de perdurer sur un substrat de culture (4) d'épaisseur limitée et une ligne de cassure préférentielle étant présente entre le fond (3) et les parois (7).

2. Module selon la revendication 1, **caractérisé en ce que** le matériau constituant le contenant (2) est hydrorétenteur et contient des substances fertilisantes pour les plantes présentes dans le module, ledit contenant (2) étant conformé par pressage.

3. Module selon la revendication 1 ou 2, **caractérisé en ce que** le contenant (2) présente une forme extérieure carrée et comporte des nervures (8) disposées en croisillon ou en grille, chaque portion de fond (3) délimitée par des segments de nervures (8) et/ou des parties de parois latérales (7) comportant au moins une ouverture ou un perçage traversant (3').

4. Module selon la revendication 1 ou 2, **caractérisé en ce que** le contenant (2) présente une forme extérieure rectangulaire et comporte des nervures (8) espacées et s'étendant transversalement par rapport à la direction longitudinale dudit contenant (2), chaque portion de fond (3) délimitée par des segments de nervures (8) et/ou des parties de parois latérales (7) comportant au moins une ouverture ou un perçage traversant (3'), par exemple à cheval sur le fond (3) et les parois latérales (7).

5. Module selon l'une quelconque des revendications 1 à 4, **caractérisé en ce que** le substrat de culture (4) présente des propriétés drainante et hydrorétentrice et une faible densité, est majoritairement de nature minérale et est soumis à une opération de tassement avant ensemencement ou, le cas échéant, préculture.

6. Module selon l'une quelconque des revendications 1 à 5, **caractérisé en ce que** la gamme variétale comprend notamment les plantes tapissantes résistant à la sécheresse.

7. Module selon l'une quelconque des revendications 1 à 6, **caractérisé en ce que** la gamme variétale comprend des espèces choisies dans le groupe formé par les plantes succulentes, les graminées et les plantes vivaces xérophiles.

8. Arrangement de végétalisation extensive pour toits ou terrasses, **caractérisé en ce qu'**il est principalement constitué, d'une part, par un complexe (9, 10, 11) isolant et étanchéifiant recouvrant la surface du toit ou de la terrasse (5) considéré(e), d'autre part, par une couche drainante (12) à forte capacité hydrorétentrice recouvrant ledit complexe (9, 10, 11) et, enfin, par des modules (1) selon l'une quelconque des revendications 1 à 7, disposés de manière adjacente les uns à côté des autres et en nombre suffisant pour couvrir sensiblement la surface de toit ou de terrasse (5) précitée.

9. Arrangement selon la revendication 8, **caractérisé en ce que** le complexe (9, 10, 11) est essentiellement composé d'un revêtement d'étanchéité (11), par exemple de type bitumineux, éventuellement posé sur une membrane pare-vapeur (10) et un isolant thermique (9), l'ensemble étant posé sur la surface du toit ou de la terrasse (5) à couvrir de végétation.

10. Arrangement selon l'une quelconque des revendications 8 et 9, **caractérisé en ce que** la couche drainante (12) est formée d'un produit choisi dans le groupe formé par les grains d'argile expansée concassés et calibrés, les grains de pouzzolane calibrés, les grains de pierre ponce calibrés, les granulats à pouvoir hydrorétenteur similaires ou encore les plaques de polystyrène expansé.

11. Procédé d'installation d'une végétation extensive sur des toits ou des terrasses, **caractérisé en ce qu'**il consiste à mettre en place un complexe isolant et étanchéifiant (9, 10, 11) sur la surface de toit ou de terrasse (5) à recouvrir, puis à disposer une couche drainante (12) sur ledit complexe (9, 10, 11) et, enfin, à déposer côte à côte des modules (1) selon l'une quelconque des revendications 1 à 7 sur ladite couche drainante (12), après enlèvement de leurs parois latérales (7) et de manière à mettre en contact les fonds (3) de modules (1) adjacents et à recouvrir sensiblement la totalité de ladite surface.

## Patentansprüche

1. Modul für die Realisierung einer extensiven Vegetation auf Dächern oder Terrassen, hauptsächlich aufweisend einen Behälter (2) mit vieleckigem Umfang, welcher einen perforierten und einen aus bioabbaubarem Material bestehenden Boden (3) aufweist, und ein Kultursubstrat (4), das mit einer vorbestimmten Dicke den Boden (3) des Behälters (2) bedeckt und mit Saatgut (6) besät ist oder vorkultivierte Pflanzen (6') trägt, **dadurch gekennzeichnet, dass** der Behälter (2) die Form eines Rechteckbechers oder einer Kassette mit geringer Tiefe aufweist, auf der Basis von recycelter Pappmasse durch Pressen oder Prägen mit hohem Druck hergestellt ist, eine im Wesentlichen vierseitige äußere Form aufweist und einerseits vertikale oder leicht nach außen geneigte Seitenwände (7), die in Rändern (7') enden oder nicht, und andererseits einen ebenen Boden (3), der mit Verstärkungs- und Versteifungsrippen (8) versehen ist, die durch Verformung des Bodens (3) gebildet sind, umfasst, wobei das Saatgut (6) und die Pflanzen (6') aus einem vielseitigen Bereich ausgewählt sind und diese auf einem Kultursubstrat (4) mit begrenzter Dicke wachsen und bestehen können, und eine bevorzugte Bruchlinie zwischen dem Boden (3) und den Wänden (7) vorhanden ist.

2. Modul nach Anspruch 1, **dadurch gekennzeichnet, dass** das den Behälter (2) bildende Material wasserspeichernd ist und Düngesubstanzen für die im Modul vorhandenen Pflanzen enthält, wobei der Behälter (2) durch Pressen ausgebildet wird.

3. Modul nach Anspruch 1 oder 2, **dadurch gekennzeichnet, dass** der Behälter (2) eine quadratische äußere Form aufweist und Rippen (8) umfasst, die in einem Kreuz oder Gitter angeordnet sind, wobei jeder Teil des Bodens (3), der durch Rippensegmente (8) und/oder Teile von Seitenwänden (7) begrenzt ist, mindestens eine Öffnung oder eine Durchgangsbohrung (3') umfasst.

4. Modul nach Anspruch 1 oder 2, **dadurch gekennzeichnet, dass** der Behälter (2) eine rechteckige äußere Form aufweist und Rippen (8) umfasst, die beabstandet sind und sich bezüglich der Längsrichtung des Behälters (2) quer erstrecken, wobei jeder Teil des Bodens (3), der durch Rippensegmente (8) und/oder Teile von Seitenwänden (7) begrenzt ist, mindestens eine Öffnung oder eine Durchgangsbohrung (3') umfasst, beispielsweise rittlings auf dem Boden (3) und den Seitenwänden (7).

5. Modul nach einem der Ansprüche 1 bis 4, **dadurch gekennzeichnet, dass** das Kultursubstrat (4) entwässernde und wasserspeichernde Eigenschaften und eine geringe Dichte aufweist, mehrheitlich von mineralischer Art ist und vor dem Besäen oder gegebenenfalls dem Vorkultivieren einem Verdichtungsvorgang unterzogen wird.

6. Modul nach einem der Ansprüche 1 bis 5, **dadurch gekennzeichnet, dass** der vielseitige Bereich insbesondere die auskleidenden Pflanzen, die der Trockenheit standhalten, umfasst.

7. Modul nach einem der Ansprüche 1 bis 6, **dadurch gekennzeichnet, dass** der vielseitige Bereich Gattungen umfasst, die aus der Gruppe ausgewählt sind, die aus den saftigen Pflanzen, den Gräsern und den mehrjährigen xerophilen Pflanzen besteht.

8. Anordnung zur extensiven Bepflanzung für Dächer oder Terrassen, **dadurch gekennzeichnet, dass** sie hauptsächlich einerseits aus einem isolierenden und abdichtenden Komplex (9, 10, 11), der die Oberfläche des betrachteten Dachs oder der betrachteten Terrasse (5) bedeckt, andererseits aus einer entwässernden Schicht (12) mit starkem Wasserspeichervermögen, die den Komplex (9, 10, 11) bedeckt, und schließlich aus Modulen (1) nach einem der Ansprüche 1 bis 7, die in benachbarter Weise nebeneinander und in einer Anzahl angeordnet sind, die ausreicht, um die Oberfläche des vorstehend genannten Dachs oder der vorstehend genannten Terrasse (5) im Wesentlichen zu bedecken, besteht.

9. Anordnung nach Anspruch 8, **dadurch gekennzeichnet, dass** der Komplex (9, 10, 11) im Wesentlichen aus einer Dichtungsauskleidung (11), beispielsweise vom Bitumentyp, zusammengesetzt ist, die eventuell auf einer Dampfschutzmembran (10) und einer thermischen Isolierung (9) angeordnet ist, wobei die Baugruppe auf der Oberfläche des Dachs oder der Terrasse (5) angeordnet wird, das/die mit Vegetation zu bedecken ist.

10. Anordnung nach einem der Ansprüche 8 und 9, **dadurch gekennzeichnet, dass** die entwässernde Schicht (12) aus einem Produkt gebildet ist, das aus der Gruppe ausgewählt ist, die aus den geschroteten und kalibrierten Körnchen aus geschäumtem Ton, den kalibrierten Puzzolanerdekörnchen, den kalibrierten Bimssteinkörnchen, den ähnlichen Granulaten mit wasserspeicherndem Vermögen oder auch den Platten aus geschäumtem Polystyrol besteht.

11. Verfahren zur Installation einer extensiven Vegetation auf Dächern oder Terrassen, **dadurch gekennzeichnet, dass** es darin besteht, einen isolierenden und abdichtenden Komplex (9, 10, 11) auf der Oberfläche des zu bedeckenden Dachs oder der zu bedeckenden Terrasse (5) anzuordnen, dann eine entwässernde Schicht (12) auf dem Komplex (9, 10, 11) anzuordnen, und schließlich Module (1) nach einem der Ansprüche 1 bis 7 nebeneinander auf der entwässernden Schicht (12), nach dem Entfernen ihrer Seitenwände (7) und um die Böden (3) von benachbarten Modulen (1) in Kontakt zu bringen und im Wesentlichen die Gesamtheit der Oberfläche zu bedecken, abzusetzen.

## Claims

1. Module for producing extensive vegetation on roofs or terraces, consisting mainly of a container (2) which has a polygonal periphery, which has a perforated base (3) and which is made from a biodegradable material and of a culture substrate (4), which covers the base (3) of the container (2) to a predetermined depth and is provided with seeds (6) or with precultivated plants (6'), **characterised in that** the container (2) is in the shape of a tray or a shallow box, is made from cardboard pulp recycled by pressing or high-pressure moulding, has a substantially quadrilateral exterior form and comprises, on the one hand, lateral walls (7), which may be vertical or slope slightly outwards, which may or may not have rims (7') at their ends, and, on the other hand, a flat base (3) provided with reinforcing and rigidifying ribs (8) formed by deformation of the shape of said base (3), the seeds (6) and the plants (6') being chosen from a range of varieties that are likely to grow and endure on a culture substrate (4) of limited depth, and a preferential break line being present between the base (3) and the walls (7).

2. Module according to claim 1, **characterised in that** the material from which the container (2) is made is water-retentive and contains fertilising substances for the plants present in the module, said container (2) being shaped by pressing.

3. Module according to claim 1 or 2, **characterised in that** the container (2) has a square exterior form and comprises ribs (8) arranged as a crosspiece or grid, each portion of the base (3) being delimited by rib segments (8) and/or parts of the lateral walls (7) and containing at least one opening or infiltration hole (3').

4. Module according to claim 1 or 2, **characterised in that** the container (2) has a rectangular exterior form and comprises ribs (8) spatially remote from one another and extending transversely in relation to the longitudinal direction of said container (2), each portion of the base (3) being delimited by the rib segments (8) and/or parts of the lateral walls (7) and containing at least one through-opening or through-hole (3'), for example straddling the base (3) and the lateral walls (7).

5. Module according to any one of claims 1 to 4, **characterised in that** the culture substrate (4) displays drainage and water-retentive properties and a low density, is predominantly of a mineral nature and is subjected to a process of compression prior to seeding or, if appropriate, preculture.

6. Module according to any one of claims 1 to 5, **characterised in that** the range of plant varieties includes in particular ground cover resistant to dryness.

7. Module according to any one of claims 1 to 6, **characterised in that** the range of plant varieties includes species selected from the group formed by succulent plants, speargrasses and xerophile perennial plants.

8. Arrangement for extensive vegetalisation for roofs or terraces, **characterised in that** it consists mainly, on the one hand, of an insulating and sealing complex (9, 10, 11) covering the surface of the roof or the terrace (5) in question, on the other hand, of a drainage bed (12) with a high water-retentive capacity covering said complex (9, 10, 11), and, lastly, modules (1) according to any one of claims 1 to 7, disposed adjacently side by side and in sufficient number substantially to cover the aforementioned surface of the roof or terrace (5).

9. Arrangement according to claim 8, **characterised in that** the complex (9, 10, 11) is essentially composed of an impermeable coating (11), for example of a bituminous type, optionally placed on a vapour-proof membrane (10) and a heat insulator (9), the assembly then being placed on the surface of the roof or the terrace (5) to be covered with vegetation.

10. Arrangement according to any one of claims 8 and 9, **characterised in that** the drainage bed (12) is made of a product selected from the group formed by ground and graded expanded clay granules, graded pozzuolana granules, graded pumice stone granules, similar aggregates with water-retentive capacity, or else expanded polystyrene sheets.

11. Process for planting extensive vegetation on roofs or terraces, **characterised in that** an isolating and sealing complex (9, 10, 11 ) is set up on the surface of the roof or terrace (5) to be covered, a drainage bed (12) is then disposed on said complex (9, 10, 11), and, lastly, modules (1) according to any one of claims 1 to 7, after their lateral walls (7) have been removed, are placed wall by wall on said drainage bed (12) and arranged in such a way as to bring into contact the bases (3) of adjacent modules (1) and substantially to cover the whole of said surface.
